# EUROPEAN PATENT SPECIFICATION

(11) **EP 0 512 708 B1**
(45) Date of publication and mention of the grant of the patent: **18.09.1996**
(21) Application number: 92303550.5
(22) Date of filing: 21.04.1992
(51) Int. Cl.: B60K 41/28, B60K 41/08, F16H 3/12

(54) **Compound power downshift method/system**
Verbund-Herunterschaltverfahren und -System mit kickdown
Système et méthode pour un rétrogradage composé en accélération

(30) Priority: 09.05.1991 US 698751
(43) Date of publication of application: 11.11.1992
(73) Proprietor: EATON CORPORATION, Cleveland, Ohio 44114 (US)
(72) Inventor: Boardman, Mark David, Portage, Michigan 49003 (US)
(74) Representative: Douglas, John Andrew

(56) References cited:
- EP-A- 0 117 342
- EP-A- 0 170 465
- EP-A- 0 178 110
- US-A- 4 614 126

## Description

### BACKGROUND OF THE INVENTION

### Related Applications

This application is related to co-pending U.S. patent specifications:
5 109 721 entitled RANGE SHIFTING ONLY FAULT TOLERANCE METHOD/SYSTEM;
5 109 729 entitled THROTTLE CONTROL FAULT DETECTION AND TOLERANCE METHOD/SYSTEM;
5 094 711 entitled TOOTH BUTT/BUZZ CONTROL METHOD/SYSTEM;
5 136 897 entitled SMOOTH UPSHIFT CONTROL METHOD/SYSTEM;
5 305 213 entitled DRIVELINE TORQUE LIMIT CONTROL STRATEGY-USING SAE J1922 TYPE ENGINE CONTROL; and
5 274 553 entitled TORQUE CONVERTER SLIP RATE BASED SKIP POWER DOWNSHIFT CONTROL STRATEGY,
all assigned to Eaton Corporation.

### Field of the Invention

The present invention relates to a control system and control method for controlling the operation of an automated mechanical transmission system, preferably of the type including an engine, a torque converter, a lock-up/disconnect clutch assembly, a compound mechanical transmission and a power synchronizer.

In particular, the present invention relates to a control system/method for an automated transmission system as described above wherein the time required for a compound power downshift is minimized by engaging the master clutch or disconnect clutch and using the engine to bring the input shaft to or towards a target (synchronous) speed whilst the auxiliary section is being downshifted.

### Description of the Prior Art

Mechanical transmission systems of the compound range, splitter or combined range and splitter type are well known in the prior art as may be seen by reference to U.S. Patent Nos. 3,105,395; 3,283,613; 4,788,889; 4,754,665 and 4,735,109.

Automatic mechanical transmission systems comprising mechanical transmissions and controls and actuators to automatically shift same, usually electronically controlled in accordance with sensed inputs and predetermined logic rules, are known. Examples of such systems may be seen by reference to U.S. Patent Nos. 4,648,290; 4,595,986; 4,527,447; 4,711,141; 4,792,901; 4,361,060; 4,140,031 and 4,081,065. Such systems may also be seen by reference to SAE Paper No. 831776 titled "AUTOMATED MECHANICAL TRANSMISSION CONTROLS".

Fault tolerance logic routines for automatic transmissions are known as may be seen by reference to U.S. Patent Nos. 4,922,425; 4,849,899 and 4,899,279.

Automatic transmission systems including a torque converter drivingly interposed a drive engine and a mechanical change gear transmission and/or including torque converter bypass or lock-up devices are also known as may be seen by reference to U.S. Patent Nos. 3,593,596; 4,261,216; 4,271,724; 4,351,205 and 4,375,171.

Automatic mechanical transmission systems utilizing power synchronizer devices, i.e. devices independent of engine speed to provide input shaft braking and acceleration, and not manipulation of engine speed, to synchronize the transmission jaw clutch members are known in the prior art. Examples of such systems may be seen by reference to U.S. Patent Nos. 3,478,851, 4,023,443; 4,140,031 and 4,614,126.

Automatic mechanical transmission systems having a power synchronizer and also having a torque converter drivingly interposed a drive engine and the transmission input shaft, and including a torque converter lock-up/disconnect clutch assembly, are known. Examples of such systems may be seen by reference to U.S. Patent Nos. 4,784,019 and 4,860,861 and S.A.E. Paper No. 881830 entitled "THE EATON CEEMAT (CONVERTER ENHANCED ELECTRONICALLY MANAGED AUTOMATIC TRANSMISSION)".

Such transmission systems provide an automatic mechanical transmission system utilizing a mechanical change gear transmission of a structure identical or substantially identical to the structure of transmissions intended for manual usage, providing the advantages of a torque converter for vehicle start-ups and the advantages of nonslipping connection between the engine and transmission at higher vehicle speeds/gear ratios and providing relatively rapid synchronization of the transmission positive jaw clutches. By providing an automatic mechanical transmission system based upon the same, or substantially the same, mechanical change gear transmission utilized for manual transmission systems, manufacturing, inventory and maintenance cost savings are obtained. To the transmission is added, if necessary, shifting mechanisms suitable for automatic control by solenoids or the like. An example of such a shifting mechanism may be seen by reference to above-mentioned U.S. Patent Nos. 4,361,060 and 4,899,607 and U.S. Patent Nos. 4,873,881; 4,722,237 and 4,445,393. A power synchronizer mechanism as disclosed in above-mentioned U.S. Patent Nos. 4,614,126; 3,478,851 or 4,023,443 is also added for synchronizing the transmission positive jaw clutches.

A torque converter is drivingly interposed the drive engine and transmission. A torque converter lock-up and disconnect clutch structure is provided comprising a first and a second separate, independently operable, clutches, preferably friction clutches, for coupling the torque converter driven member or turbine to the transmission input shaft and for coupling the torque converter input or impeller (i.e. the engine output) to the transmission input shaft, respectively.

The torque converter is drivingly interconnected between the engine and transmission only when the first coupling is engaged and the second disengaged. The torque converter is locked-up, i.e. the turbine driven directly by the engine, when the second clutch is engaged. The transmission is driven directly from the engine, whenever the second clutch is engaged simultaneously with the first clutch.

When the first coupling is disengaged, regardless of the condition of the second coupling, the transmission input shaft is disconnected from the engine torque and also from the inertia of the torque converter and from the inertia of the second coupling allowing the jaw clutches to be easily disengaged, the power synchronizer mechanism to act quickly due to relatively low inertia on the input shaft and also allowing a selected gear to be pre-engaged with the vehicle at rest and in the drive condition.

Electronic and other engine fuel control systems wherein the fuel supplied to the engine may be modulated to provide a desired engine speed, regardless of the operators setting of the throttle pedal, are known in the prior art. Such systems may be seen by reference to above-mentioned U.S. Patent Nos. 4,081,065; 4,361,060 and 4,792,901 and by reference to the SAE J1922 electronic engine control standards.

With automated transmission systems of the type described, i.e. a transmission requiring a torque break during shifting, it is important to provide a shift sequence for compound power downshifts which will minimize the time required. to implement same.

EP-A-0 117 342 proposes re-engaging the clutch in neutral during downshifts while accelerating the engine towards a synchronization speed. US-A-4614126 discloses the pre-characterizing part of Claims 1 and 8.

### SUMMARY OF THE INVENTION

In accordance with the present invention alternatively defined in Claims 1 and 8, the drawbacks of the prior art are overcome or minimized by the provision, in an automated mechanical transmission system of the type described, of a compound power downshift sequence which will minimize the time required to implement such a shift.

The above is accomplished, preferably in an automatic mechanical transmission system based upon a mechanical change gear transmission having power synchronization on the output side for which are added shifting mechanisms suitable for automatic control, a power synchronizer mechanism as disclosed in above-mentioned U.S. Patent Nos. 4,614,126, a torque converter drivingly interposed the drive engine and transmission and a torque converter lock-up and disconnect clutch structure comprising a first and a second separate, independently operable, clutches, preferably friction clutches, for coupling the torque converter driven member or turbine to the transmission input shaft and for coupling the torque converter input or impeller (i.e. the engine output) to the transmission input shaft, respectively, by the provision of a control system/method wherein, during compound power downshifts, the engine and clutch are used in a "double clutching" manner to bring the input shaft up to target speed while the auxiliary section is shifted.

Accordingly, it is an object of the present invention to provide a new and improved automatic mechanical transmission system utilizing a power synchronizer, a torque converter drivingly interposed the engine and mechanical transmission and further utilizing an improved torque converter lock-up and disconnect clutch structure.

Another object of the present invention is to provide an improved, quicker, compound power downshift sequence for transmission systems of the type described.

These and other objects and advantages of the present invention will become apparent from a reading of the description of the preferred embodiment taken with the drawings.

### BRIEF DESCRIPTION OF THE DRAWINGS

Figure 1 is a schematic view of the torque converter and torque converter disconnect and bypass clutch structure of the present invention.

Figure 2 is a schematic illustration of the automatic mechanical transmission system of the present invention.

Figure 3 is a partial view, in section, of the automatic mechanical transmission system of the present invention.

Figure 4 is a graphical representation of a typical shift sequence for the transmission system of Figure 2.

Figure 5 is a graphical representation of the shift sequence of the present invention, for the transmission system of Figure 2, for a compound power downshift.

Figure 6 is a symbolic representation of the shift pattern for the transmission of Figure 3.

### DESCRIPTION OF THE PREFERRED EMBODIMENT

Certain terminology will be used in the following description for convenience and reference only and will not be limiting. The words "upwardly", "downwardly", "rightwardly" and "leftwardly" will designate directions in the drawings to which reference is made. The words "inwardly", and "outwardly", refer to directions towards and away from, respectively, the geometric center of the device and designated parts thereof. The above applies to the words above specifically mentioned, derivatives thereof and words of similar import.

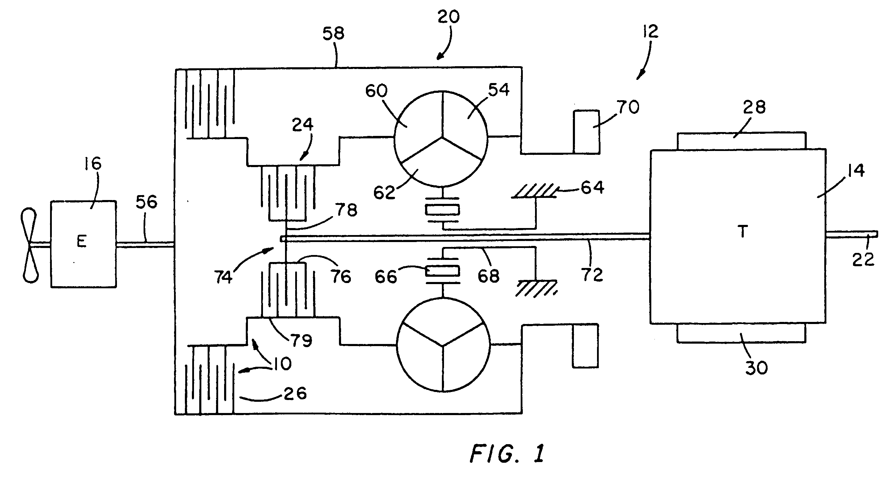

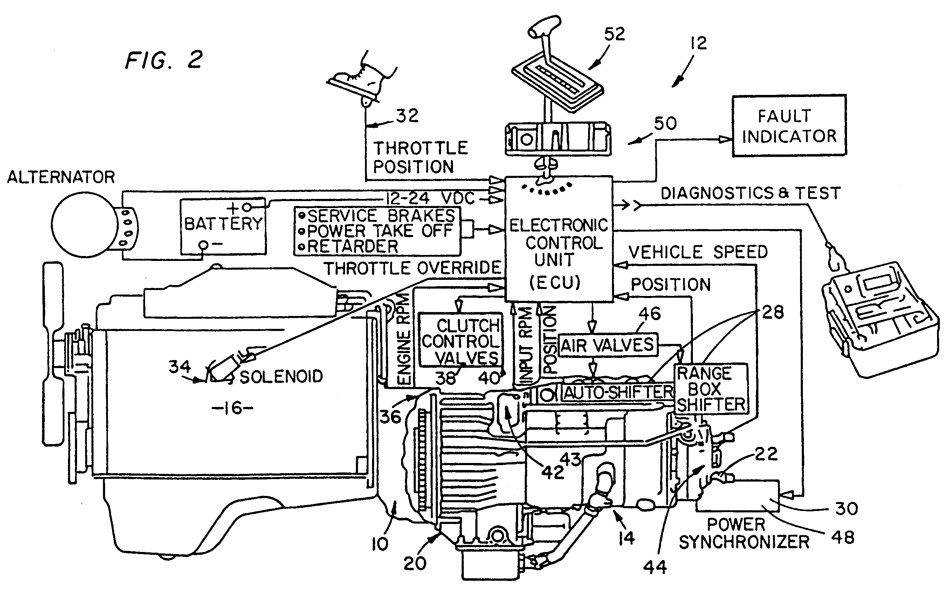

The torque converter lock-up and disconnect clutch assembly 10 and an automatic mechanical transmission system 12 utilizing same, of the present invention, are schematically illustrated in Figures 1, 2 and 3. The term "automatic mechanical transmission system" as used herein, shall mean a system comprising at least a throttle device controlled heat engine 16, a multi-speed jaw clutch type change gear transmission 14, a nonpositive coupling device such as a master friction clutch and/or a fluid coupling 10/20 interposed the engine and the transmission and a control unit 50 for automatically controlling same. Such systems will, of course, also include sensors and/or actuators for sending input signals to and/or receiving command output signals from the control unit.

While the present invention is particularly well suited for use in connection with transmission systems having a torque converter and torque converter lock-up/disconnect clutch, the invention is also applicable to transmission systems having a standard friction master clutch drivingly interposed the engine and the transmission.

The automatic mechanical transmission system 12 of the present invention is intended for use on a land vehicle, such as a heavy duty truck, but is not limited to such use. The automatic mechanical transmission system 12 illustrated includes an automatic multi-speed mechanical change gear transmission 14 driven by a prime mover throttle device controlled engine 16 (such as a diesel engine) through a fluid coupling or torque converter assembly 20. The output of the automatic transmission 14 is an output shaft 22 which is adapted for driving connection to an appropriate vehicle component such as the differential of a drive axle, a transfer case, or the like as is well known in the prior art.

As will be discussed in greater detail below, the torque converter lock-up and disconnect clutch assembly 10 includes two separate, independently engageable clutches, preferably friction clutches, a torque converter disconnect clutch 24 and a torque converter lock-up or bypass clutch 26. The transmission 14 includes a transmission operating mechanism 28 which is preferably in the format of a pressurized fluid actuated shifting assembly of the type disclosed in above-mentioned U.S. Patent No. 4,445,393. The transmission also preferably includes a power synchronizer assembly 30 which may be of the type illustrated and disclosed in above-mentioned U.S. Patent Nos. 3,478,851, 4,023,443 or 4,614,126.

The above-mentioned power train components are acted upon and monitored by several devices, each of which are known in the prior art and will be discussed in greater detail below. These devices may include a throttle position monitor assembly 32, which senses the position of the operator controlled vehicle throttle pedal or other fuel throttling device, a throttle control 34 which controls the supply of fuel to the engine, an engine speed sensor assembly 36 which senses the rotational speed of the engine, a torque converter disconnect clutch and lock-up clutch operator 40 which operates the torque converter disconnect and lock-up clutches, a transmission input shaft speed sensor 42, a transmission output shaft speed sensor 44, a transmission shifting mechanism operator 46 for controlling the operation of transmission shifting mechanism 28 and/or a power synchronizer mechanism actuator 48 for controlling the operation of power synchronizer mechanism 30.

The throttle control 34 may simply be an override device to reduce ("dip") fuel to the engine to a set or variable level regardless of the operator's positioning of the throttle pedal. Alternatively, the control 34 may correspond to and comply with the SAE J1922 electronic engine control protocols.

The above-mentioned devices supply information to and/or accept commands from an electronic central processing unit (ECU) 50. The central processing unit or controller 50 is preferably based on a digital microprocessor, the specific configuration and structure of which form no part of the present invention. The central processing unit 50 also receives information from a shift control or mode selector assembly 52 by which the operator may select a reverse (R), a neutral (N) or several forward drive (D, D_{L}) modes of operation of the vehicle. Typically, the D mode of operation is for on-highway vehicle travel while the D_{L} mode of operation is for off-road operation.

As is known, the central processing unit 50 receives inputs from the various sensors and/or operating devices. In addition to these direct inputs, the central processing unit 50 may be provided with circuitry and/or logic for differentiating the input signals to provide calculated signals indicative of the rate of change of the various monitored devices, means to compare the input signals and/or memory means for storing certain input information, such as the direction of the last shift, and means for clearing the memory upon occurrence of predetermined events. Specific circuitry for providing the above-mentioned functions is known in the prior art and an example thereof may be seen by reference to above-mentioned U.S. Patent Nos. 4,361,060 and 4,595,986 and/or by reference to a technical paper entitled "THE AUTOMATION OF MECHANICAL TRANSMISSIONS" published proceedings of a joint IEEE/SAE conference entitled International Congress 20 on Transportation Electronics, IEEE Catalog Number 84CH1988-5,.

As is well known in the operation/function of electronic control units, especially microprocessor based ECUs, the various logic functions can be performed by discrete hardwired logic units or by a single logic unit operating under different portions or subroutines of the control system logic rules (i.e. the software).

A more detailed schematic illustration of the torque converter 20 and torque converter lock-up and disconnect clutch assembly 10 drivingly interposed engine 16 and automatic change gear transmission 14 may be seen by reference to Figure 1. The torque converter assembly 20 is conventional in that it includes a fluid coupling of the torque converter type having an impeller 54 driven by the engine output or crank shaft 56 through a shroud 58, a turbine 60 hydraulically driven by the impeller and a stator or runner 62 which becomes grounded to a housing 64 via a one-way roller clutch 66 carried by a shaft 68 grounded to the housing 64. Shroud 58 also drives a pump 70 for pressurizing the torque converter, lubricating the transmission, selectively pressuring the transmission shifting mechanism 28 and/or power synchronizing mechanism 30 and/or operating the disconnect and bypass clutches 24 and 26. Pump 70 may be of any known structure such as, for example, a well known crescent gear pump.

The transmission 14 includes an input shaft 72 driven by the engine 16 via the torque converter assembly 20 and/or lock-up and disconnect clutch assembly 10. Transmission input shaft 72 carries a connecting member 74 fixed thereto for rotation therewith. Connecting member 74 includes a portion 76 associated with the torque converter disconnect clutch 24 and a second hub portion 78 splined for association with the input shaft. Briefly, as will be described in greater detail below, torque converter disconnect clutch 24 may be engaged or disengaged, independently of engagement or disengagement of lock-up clutch 26, to frictionally engage or disengage a connecting member 79 which is associated with the torque converter turbine 60 and a member of the lock-up clutch 26, to and from the transmission input shaft 72 via portion 76 of connecting member 74. Torque converter lock-up clutch 26 may be frictionally engaged or disengaged, independent of the engagement or disengagement of disconnect clutch 24, to frictionally engage the engine crankshaft 56, and shroud 58 driven thereby, to the connecting member 79.

Engagement of torque converter lock-up clutch 26 will engage the engine crankshaft 56, via shroud 58, directly with the connecting member 79, regardless of the engaged or disengaged condition of torque converter disconnect clutch 24, and thus provides an effective lock-up for locking-up the torque converter 20 and driving transmission 14 directly from the engine 16 if disconnect clutch 24 is engaged. Additionally, at speeds above torque converter lock-up speed, the lock-up clutch 26 need not be engaged and disengaged during shifting as disengagement of clutch 24 disconnects the inertia of connection member 79 from input shaft 72.

If the torque converter bypass clutch or lock-up 26 is disconnected, and the torque converter disconnect clutch 24 is engaged, the transmission 14 will be driven from engine 16 via the torque converter fluid coupling as is well known in the prior art. If the torque converter disconnect clutch 24 is disengaged, regardless of the condition of lock-up clutch 26, the transmission input shaft 72 is drivingly disengaged from any drive torque supplied by the engine or any inertial drag supplied by the torque converter, the engine and clutch 26. Disconnecting of the transmission input shaft 72 from the inertial affects of the engine, clutch 26 and/or torque converter allows the rotational speed of the input shaft 72, and all transmission gearing drivingly connected thereto, to be accelerated or decelerated by the transmission power synchronizer mechanism 30 in a more rapid manner for purposes of more rapidly achieving synchronization during a downshift or upshift of the transmission and also allows the power synchronizer 30 to cause the input shaft 72 to rotate at a rotational speed greater than any governed engine speed.

When the vehicle is at rest with the mode selector in the drive or off-highway drive mode, the disconnect clutch 24 will be engaged and the lock-up clutch 26 disengaged allowing for torque converter start-up with its well known advantages. At above a given vehicle speed and/or gear ratio, the advantages of torque converter operation are no longer required, and the increased efficiency of a direct drive between the drive engine and transmission is required. Upon these conditions, the torque converter lock-up clutch 26 will be maintained engaged allowing the transmission input shaft 72 to be driven directly from the engine via the torque converter shroud 58 and connecting member 79 when the disconnect clutch 24 is engaged.

As discussed above, clutch 24 will be disengaged to shift from a previously engaged gear to neutral, to allow the power synchronizer 30 to synchronize the jaw clutch members of the gear to be engaged and to allow engagement of the synchronized jaw clutches of the gear to be engaged.

Selection of the desired gear ratio and selection of the required engaged or disengaged condition of the torque converter disconnect or lock-up clutches, as well as the issuance of command signals to the various clutch and transmission operators is accomplished by the central processing unit 50 in a manner which is known in the prior art and which may be appreciated in greater detail by reference to above-mentioned U.S. Patent Nos. 4,361,060 and 4,595,986.

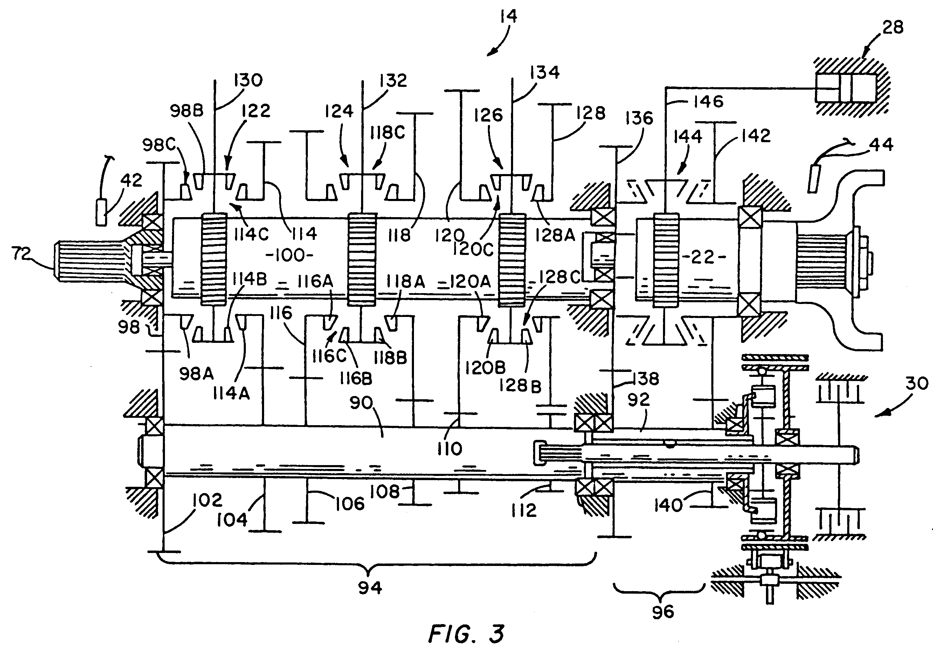

The compound transmission 14 is illustrated in in greater detail in Figure 3 and is of the type wherein the main section countershaft or countershafts 90 are coaxially aligned with the auxiliary section countershaft or countershafts 92. Transmission 14 is of a relatively standard design and is preferably of the twin countershaft type only one of which countershafts in the main and auxiliary sections, 94 and 96, respectively, is shown. Examples of such transmissions having coaxially aligned main section and auxiliary section countershafts may be seen by reference to U.S. Patent Nos. 3,105,395 and 3,138,965.

Transmission 14 includes input shaft 72 to which member 78 is fixed for rotation therewith and which additionally carries input gear 98 nonrotatably attached thereto. Main section countershaft 90 is substantially parallel to mainshaft 100 and is provided with countershaft gears 102, 104, 106, 108, 110 and 112 fixed for rotation therewith. A plurality of mainshaft gears, also called ratio gears, 114, 116, 118 and 120, surround the mainshaft and are selectively clutchable thereto, one at a time, by double sided positive jaw clutch collars 122, 124 and 126. Jaw clutch collar 122 may also clutch the input shaft 72 directly to the mainshaft 100 while clutch collar 126 may clutch reverse mainshaft gear 128 to the mainshaft.

The mainshaft gears 114, 116, 118 and 120 circle the mainshaft and are in continuous meshing engagement with, and are preferably supported by, opposed pairs of countershaft gears 104, 106, 108 and 110 which mounting means and the special advantages resulting therefrom are explained in greater detail in above-mentioned U.S. Patent Nos. 3,105,395 and 3,335,616. Reverse mainshaft gear 128 is in continuous meshing engagement with countershaft gear 112 by means of conventional intermediate idler gears (not shown). The forwardmost countershaft gear 102 is continuously meshed with and driven by input gear 98 for causing rotation of countershaft 90 whenever the input gear is rotatably driven.

Clutch collar 122 carries positive jaw clutch teeth 98b and 114b which are engageable with clutch teeth 98a and 114a, respectively, to define positive jaw clutches 98c and 114c, respectively. Clutch collar 124 carries positive jaw clutch teeth 116b and 118b which are engageable with jaw clutch teeth 116a and 118a, respectively, to define positive jaw clutches 116c and 118c, respectively. Jaw clutch collar 126 carries jaw clutch teeth 120b and 128b which are positively engageable with jaw clutch teeth 120a and 128a, respectively, to define positive jaw clutches 120c and 128c, respectively.

As is known in the prior art, each of the clutch collars are preferably directly or indirectly splined to the mainshaft for rotation therewith and axial movement relative thereto. Other mounting means for the clutch collars are known in the prior art and are intended to be included within the scope of the present invention. Each of the clutch collars 122, 124, and 126 is provided with means for receiving a shift fork or shift yoke 130, 132 and 134, respectively, whereby the clutch collars are axially moved, one at a time only, from the positions illustrated in Figure 3 by the actuator 28.

The auxiliary transmission section 96 includes output shaft 22 which is preferably coaxial with input shaft 72 and mainshaft 100 and is supported for rotation in a transmission housing by means of bearings. The auxiliary section also includes an auxiliary section countershaft 92 supported for rotation in the housing by means of bearings. Fired for rotation with mainshaft 100 is the auxiliary section drive gear 136. Auxiliary section countershaft 92 carries auxiliary section countershaft gears 138 and 140 fixed for rotation therewith. Auxiliary section countershaft gear 138 is constantly meshed with auxiliary section input gear 136 while auxiliary section countershaft gear 140 is constantly meshed with output gear 142 which surrounds the output shaft 22. A synchronized clutch structure 144, of conventional individually synchronized jaw clutch design, is utilized to selectively clutch mainshaft 100 and auxiliary drive gear 136 directly to the output shaft 22 for a direct drive connection between the mainshaft and output shaft or to clutch output gear 142 to the output shaft 22 for a reduction drive of output shaft 22 from mainshaft 100 through countershaft 92 as is well known in the prior art. Synchronized clutch structure 144 is controlled by shift fork 146 axially moved by actuator 28.

Transmission 14 is of the range type wherein the auxiliary section ratio step (or steps) is greater than the total ratio coverage of the main section ratios appearing in all ranges. Such transmissions are well known in the prior art, see U.S. Patent No. 4,754,665.

The power synchronizer assembly 30 includes a planetary speed increasing gear set driven by the output shaft 22 independently of the rotational speed of the drive engine 16, and selectively actuatable to accelerate the rotational speed of transmission elements driven by the input shaft 72 for purposes of synchronous rotation of jaw clutch members associated with the gear ratio to be engaged. Preferably, the power synchronizer assembly 30 will also include means to decelerate the transmission elements driven by the input shaft. Deceleration of the transmission elements driven by the input shaft may also be achieved by input shaft and/or engine braking devices which will preferably be controlled by central processing unit 50.

The power synchronizer assembly 30 is driven by the vehicle through gear 142 which is driven directly or indirectly by output shaft 22 and thus the power synchronizer is not effective to accelerate the mainsection countershaft 90 when the auxiliary section is not engaged. Details of construction and operation of the power synchronizer assembly 30 may be appreciated in greater detail by reference to above-mentioned U.S. Patent No. 4,614,126.

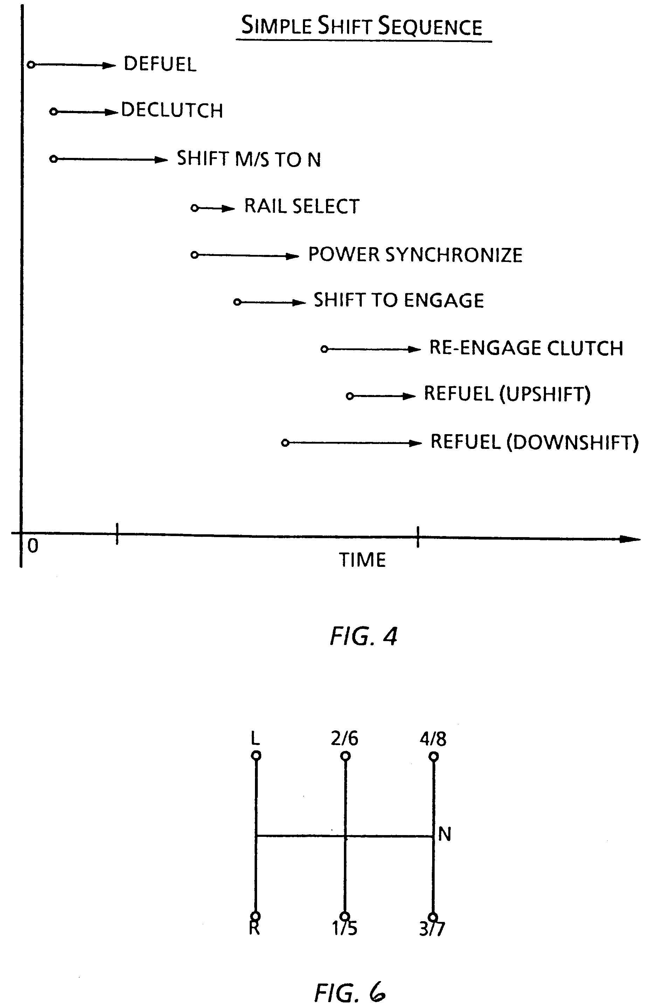

The shift sequence for a simple shift of transmission 14 in system 12 is illustrated in Figure 4. For purposes of example, assuming the ECU 50 determines that a shift from second (2nd) to third (3rd) speed is required (i.e. a simple upshift), the ECU will cause fuel controller 34 to defuel (i.e. "dip") the engine regardless of the position of the throttle pedal 32. While the engine is being defueled, the disconnect clutch (or master clutch) 24 is disengaged and a shift to mainsection 94 neutral is undertaken.

Upon defueling the engine, declutching the disconnect clutch and disengaging the mainsection, the power synchronizer is actuated to cause the mainshaft gearing (in this example 3rd speed mainshaft gear 114) to rotate at a target or substantially synchronous speed relative to mainshaft 100 as determined by output shaft speed and auxiliary section 96 ratio. Output shaft speed is sensed by sensor 44 while the speed of the various mainshaft gears is a known multiple of input shaft 72 speed as sensed by sensor 42.

The rail select function can occur at any time after mainsection disengagement and mainsection reengagement in the new ratio (3rd) is timed to occur as the power synchronizer is bringing the engaged gear towards target speed. Of course, for an upshift, the power synchronizer is normally required to retard the speed of the input shaft and associated gearing.

Upon achieving engagement of the proper mainsection ratio, the disconnect clutch is reengaged and the engine refueled.

Typically, a simple shift can be accomplished in about 0.70 to 0.80 seconds with a disconnect (i.e. torque break) time of about 0.50 seconds.

For range type compound transmissions 14 of the type illustrated, compound shifts wherein both the main and auxiliary sections are shifted, usually a 4th-5th upshift or a 5th-4th downshift in illustrated transmission 14 having a low ratio, first (1st) through eighth (8th) forward ratios and a reverse ratio (see Figure 6), can be particularly complicated and/or time consuming. This is because the power synchronizer 30 can only be activated when the auxiliary section is engaged and thus the power synchronizer cannot be used to synchronize the main section simultaneously with the auxiliary section shift portion of a compound shift.

Further, as is well known, to protect the auxiliary section synchronized jaw clutches 144, the main section 94 must be retained in neutral during an auxiliary section shift, see U.S. Patent No. 4,974,474.

While a somewhat prolonged time to accomplish a compound shift of transmission system 12 is normally not objectionable, the swiftest possible accomplishment of a power downshift is vital.

A power downshift is a downshift accomplished when the operator is requesting increased performance/power from the vehicle engine by increasing the rotational speed thereof. A power downshift is usually sensed by throttle setting exceeding a relatively high reference value and/or torque converter slip (engine speed - input shaft speed) exceeding a reference. A power downshift will, for example, occur when pulling a large load up a steep grade and thus minimizing shift and torque break times is essential.

A downshift is a shift from a higher speed ratio to a lower speed ratio, i.e. a shift from seventh (7th) to sixth (6th) speeds.

In accordance with the present invention, a compound downshift sequence, in particular a compound power downshift sequence, is provided which will minimize the time required to downshift the automated mechanical transmission system 12 discussed above.

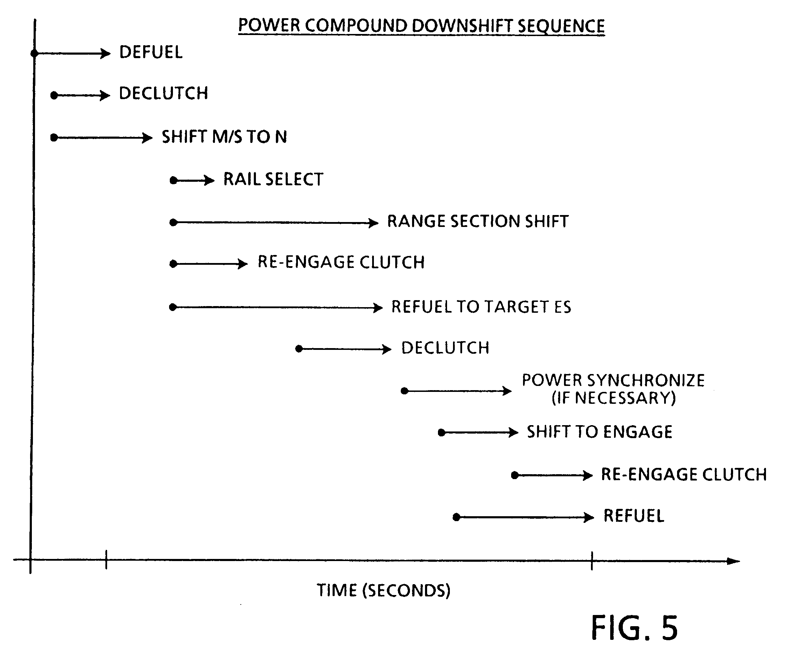

The power downshift sequence of the present invention is illustrated in Figure 5. Assuming the ECU 50 determines that a compound power downshift is required from 5th speed to 4th speed (i.e. disengaging gear 136 and engaging gear 142 to the output shaft 22 in the auxiliary section 96 and disengaging gear 118 and engaging gear 98 to the mainshaft 100 in the main section 94), the ECU will cause the engine to defuel, the disconnect clutch to declutch and the mainsection to disengage, as in the simple shift sequence.

Upon defueling the engine, declutching the disconnect clutch and shifting the main section to neutral, the ECU then causes the range, i.e. the auxiliary, section 96 to shift, which, until the auxiliary section shift is complete, disables the power synchronizer 30. To minimize the time required to shift the main section upon completion of the auxiliary section shift, the main section is preconditioned for shifting when the auxiliary section is shifting. While retaining the mainsection in neutral, the disconnected master clutch is reengaged and the engine refueled to bring the engine and input shafts speed up towards or maintained at a target speed.

Upon completion of the auxiliary section shift, the clutch is declutched, the power synchronizer utilized, if necessary, to cause the gear 98 to rotate at target/substantially synchronous speed relative to main shaft 100 and then the mainsection shift portion of the compound shift is completed in accordance with the above-discussed simple shift sequence.

It has been found that by utilizing the above-described power downshift sequence including preconditioning the main section by accelerating the input shaft and associated gearing to a target speed, rather than simply relying on only the power synchronizer to accelerate the gearing after completion of the auxiliary shift, will result in as much as a thirty percent (30%) decrease in the time required to accomplish a power downshift.

By way of example, the compound power downshift illustrated in Figure 5 can be completed in about 1.30 to 1.45 seconds and the disconnect time is about 1.0 to 1.15 seconds.

The target speed of the input shaft/ratio gear to be engaged may be a speed slightly greater than synchronous speed to allow for the normal decay in rotational speed expected during the process of reengaging the main section.

Accordingly, it may be seen that a control method/system for an automated mechanical transmission system of the type described wherein the time required to complete a compound downshift, in particular a compound power downshift, has been provided.

## Claims

1. A method for down-shifting an automated mechanical transmission system (12) of the type comprising a compound mechanical transmission (14) comprising a multiple ratio main section (94) connected in series with a multiple ratio auxiliary section (96), a fuel controlled engine (16), a nonpositive coupling (10) drivingly interposed between the engine and an input shaft (72) of said transmission, an operator set throttle control device (32), a throttle override device (34) effective to at least decrease the fuel supplied to the engine regardless of the setting of the throttle control device, a power synchronizer assembly (30) actuatable to synchronize members of the main section rotatably associated with said input shaft when the main section is disengaged and the auxiliary section is engaged, said power synchronizer being driven by the output shaft (22) and a central control unit (50) effective to receive input signals indicative of the status of the transmission system and to process same in accordance with logic rules to issue command output signals to a plurality of system actuators; said method
characterized by:
sensing requirement for a compound power downshift including sensing that the throttle control device setting exceeds a first reference value;
responsive to sensing a required compound power downshift, causing the engine to be supplied with decreased fuel, causing the nonpositive coupling to be decoupled and causing the main section to be shifted to neutral;
then causing initiation of downshift of the auxiliary section; and
while the auxiliary section is being down-shifted, retaining the main section in neutral, recoupling the nonpositive coupling and refueling the engine to cause said members of the main section to be rotationally accelerated towards a target rotational speed.

2. The method of claim 1 further comprising: after the auxiliary section has completed down-shifting, again decoupling said nonpositive coupling, actuating said power synchronizer if necessary to cause said members to rotate at said target speed, causing said main section to be shifted into the selected ratio thereof, engaging said nonpositive coupling and causing the engine to be fueled in accordance with the setting of said throttle control device.

3. The method of claim 1 or 2 wherein said sensing additionally comprises sensing that the difference between sensed engine speed minus sensed input shaft speed exceeds a second reference value.

4. The method of claims 1,2 or 3 wherein said transmission is a range type compound transmission.

5. The method of any of claims 1-4 wherein said auxiliary section (96) is equipped with synchronized jaw clutches (144).

6. The method of any of claims 1-5 wherein said coupling comprises a torque converter (20) and a frictional torque converter disconnect clutch (24).

7. The method of claim 6 wherein said sensing additionally comprises sensing that torque converter slip exceeds a second reference value.

8. A control system for down-shifting an automated mechanical transmission system (12) of the type comprising a compound mechanical transmission (14) comprising a multiple ratio main section (94) connected in series with a multiple ratio auxiliary section (96), a fuel controlled engine (16), a nonpositive coupling (10) drivingly interposed between the engine and an input shaft (72) of said transmission, an operator set throttle control device (32), a throttle override device (34) effective to at least decrease the fuel supplied to the engine regardless of the setting of the throttle control device, a power synchronizer assembly (30) actuatable to synchronize members of the main section rotatably associated with said input shaft when the main section is disengaged and the auxiliary section is engaged, said power synchronizer being driven by the output shaft (22) and a central control unit (50) effective to receive input signals indicative of the status of the transmission system and to process same in accordance with logic rules to issue command output signals to a plurality of system actuators; characterized in that:
said rules include sending a required compound power downshift including sensing that the throttle control device setting exceeds a first reference value;
means responsive to the sensing of a required compound power downshift, for causing the engine to be supplied with decreased fuel, for causing the nonpositive coupling to be decoupled and then causing the main section to be shifted to neutral;
means for then causing the auxiliary section to initiate being downshifted; and the system arranged such that;
while the auxiliary section is being down-shifted, the main section is retained in neutral, the nonpositive coupling is recoupled and the engine is refuelled to cause said members of the main section to be rotationally accelerated towards a target rotational speed.

9. The system of claim 8 further comprising:
means effective for, after the auxiliary section has completed down-shifting, again decoupling said nonpositive coupling, actuating said power synchronizer assembly (30) if necessary to cause said members to rotate at said target speed, causing said main section (94) to be shifted into the selected ratio thereof, engaging said nonpositive coupling (10) and causing the engine (16) to be fueled in accordance with the setting of said throttle control device (32).

10. The system of claim 8 or 9 wherein said responsive means additionally comprises means sensing that the difference between sensed engine speed minus sensed input shaft speed exceeds a second reference value.

11. The system of claim 8,9 or 10 wherein said transmission is a range type compound transmission.

12. The system of any of claims 8-11 wherein said auxiliary section (96) is equipped with synchronized jaw clutches (144).

13. The system of any of claims 8-12 wherein said coupling comprises a torque converter (20) and a frictional torque converter disconnect clutch (24).

14. The method of claim 13 wherein said sensing means additionally comprises means sensing that torque converter slip exceeds a second reference value.

## Patentansprüche

1. Verfahren zum Herunterschalten eines automatischen mechanischen Getriebesystems (12) der Bauart mit einem mechanischen Verbundgetriebe (14), das eine mehrgänge Hauptgruppe (94), die mit einer mehrgängigen Hilfsgruppe (96) in Serie liegt, aufweist, mit einem kraftstoffgesteuerten Motor (16), mit einer nichtformschlüssigen Kupplung (10), die antriebsmäßig zwischen dem Motor und einer Eingangswelle (72) des Getriebes angeordnet ist, mit einer durch den Fahrer einstellbaren Pedalsteuereinrichtung (32), mit einer Pedalübersteuerungseinrichtung (34), die dazu dient, die Kraftstoffzufuhr zu dem Motor, unabhängig von der Einstellung der Pedalsteuereinrichtung, zumindest zu vermindern, mit eine Synchronisiereinrichtung (30) mit Fremdkraft (Powersynchronisiereinrichtung), die in dem Sinne einer Synchronisation der Teile der Hauptgetriebegruppe miteinander, die rotationsmäßig der Eingangswelle zugeordnet sind, zu betätigen ist, wenn die Hauptgetriebegruppe sich im Leerlauf befindet und die Hilfsgetriebegruppe durchgekuppelt ist, wobei die Powersynchronisiereinrichtung von der Ausgangswelle (22) angetrieben ist, und mit einer zentralen Steuereinheit (50), die dazu dient, für den Zustand des Getriebesystems kennzeichnende Signale entgegenzunehmen und diese entsprechend logischer Regeln zu verarbeiten, um Ausgangssteuersignale für eine Vielzahl von Systemaktoren zu erzeugen, dadurch gekennzeichnet, daß:
eine Anforderung für einen Verbundherunterschaltvorgang erfaßt wird einschließlich der Feststellung, daß die Einstellung der Pedalsteuereinrichtung einen ersten Bezugswert übersteigt;
daß als Reaktion auf das Erfassen, wonach ein kraftgetriebener Verbundherunterschaltvorgang erforderlich ist, veranlaßt wird, den Motor mit verminderter Kraftstoffmenge zu versorgen, veranlaßt wird, die nichtformschlüssige Kupplung auszurücken, und veranlaßt wird, die Hauptgetriebegruppe in den Leerlauf zu schalten;
daß sodann der Beginn des Herunterschaltens der Hilfsgruppe veranlaßt wird; und
daß während die Hilfsgruppe heruntergeschaltet wird, die Hauptgruppe im Leerlauf gehalten wird, die nichtformschlüssige Kupplung wieder eingerückt wird und der Motor wieder mit Kraftstoff versorgt wird, um zu bewirken, daß die Teile der Hauptgrupe in Richtung auf die Zieldrehzahl beschleunigt werden.

2. Verfahren nach Anspruch 1, zu dem es ferner gehört:
daß, nachdem in der Hilfsgruppe das Herunterschalten abgeschlossen ist, die nichtformschlüssige Kupplung wieder ausgerückt wird, daß die Powersynchronisiereinrichtung, falls erforderlich, betätigt wird, um zu veranlassen, daß die Teile mit der Zieldrehzahl rotieren, daß veranlaßt wird, daß die Hauptgruppe in den gewünschten Gang geschaltet wird, daß die nichtformschlüssige Kupplung eingerückt wird und daß veranlaßt wird, daß der Motor entsprechend der Einstellung der Pedalsteuereinrichtung mit Kraftstoff versorgt wird.

3. Verfahren nach Anspruch 1 oder 2, bei dem es zu dem Erfassen zusätzlich gehört, daß gemessen wird, ob die Differenz zwischen der gemessenen Motordrehzahl abzüglich der gemessenen Eingangswellendrehzahl einen zweiten Bezugswert übersteigt.

4. Verfahren nach den Ansprüchen 1, 2 oder 3, bei dem das Getriebe ein Verbundgetriebe mit Rangegruppe ist.

5. Verfahren nach einem der Ansprüche 1 bis 4, bei dem die Hilfsgruppe (96) mit synchronisierten Klauenkupplungen (144) ausgerüstet ist.

6. Verfahren nach einem der Ansprüche 1 bis 5, bei dem die Kupplung einen Drehmomentwandler (20) sowie eine reibschlüssig wirkende Drehmomentwandlertrennkupplung (24) enthält.

7. Verfahren nach Anspruch 6, bei dem es zu dem Messen zusätzlich gehört, daß erfaßt wird, ob der Schlupf des Drehmomentwandlers einen zweiten Referenzwert übersteigt.

8. Steuersystem zum Herunterschalten eines automatischen mechanischen Getriebesystems (12) der Bauart mit einem mechanischen Verbundgetriebe (14), das eine mehrgänge Hauptgruppe (94), die mit einer mehrgängigen Hilfsgruppe (96) in Serie liegt, aufweist, mit einem kraftstoffgesteuerten Motor (16), mit einer nichtformschlüssigen Kupplung (10), die antriebsmäßig zwischen dem Motor und einer Eingangswelle (72) des Getriebes angeordnet ist, mit einer durch den Fahrer einstellbaren Pedalsteuereinrichtung (32), mit einer Pedalübersteuerungseinrichtung (34), die dazu dient, die Kraftstoffzufuhr zu dem Motor, unabhängig von der Einstellung der Pedalsteuereinrichtung, zumindest zu vermindern, mit eine Synchronisiereinrichtung (30) mit Fremdkraft (Powersynchronisiereinrichtung), die in dem Sinne einer Synchronisation der Teile der Hauptgetriebegruppe miteinander, die rotationsmäßig der Eingangswelle zugeordnet sind, zu betätigen ist, wenn die Hauptgetriebegruppe sich im Leerlauf befindet und die Hilfsgetriebegruppe durchgekuppelt ist, wobei die Powersynchronisiereinrichtung von der Ausgangswelle (22) angetrieben ist, und mit einer zentralen Steuereinheit (50), die dazu dient, für den Zustand des Getriebesystems kennzeichnende Signale entgegenzunehmen und diese entsprechend logischer Regeln zu verarbeiten, um Ausgangssteuersignale für eine Vielzahl von Systemaktoren zu erzeugen, dadurch gekennzeichnet, daß es zu den Regel gehört:
eine Anforderung für einen Verbundherunterschaltvorgang zu erfassen einschließlich der Feststellung, daß die Einstellung der Pedalsteuereinrichtung einen ersten Bezugswert übersteigt;
daß reagierende Mittel in Abhängigkeit von dem Erfassen, wonach ein kraftgetriebener Verbundherunterschaltvorgang erforderlich ist, veranlassen, den Motor mit verminderter Kraftstoffmenge zu versorgen, veranlassen, die nichtformschlüssige Kupplung auszurücken, und veranlassen, die Hauptgetriebegruppe in den Leerlauf zu schalten;
daß sodann Mittel den Beginn des Herunterschaltens der Hilfsgruppe veranlassen; und
daß das System derart gestaltet ist, daß während die Hilfsgruppe heruntergeschaltet wird, die Hauptgruppe im Leerlauf gehalten wird, die nichtformschlüssige Kupplung wieder eingerückt wird und der Motor wieder mit Kraftstoff versorgt wird, um zu bewirken, daß die Teile der Hauptgrupe in Richtung auf die Zieldrehzahl beschleunigt werden.

9. System nach Anspruch 8, zu dem ferner Mittel gehören, die dazu dienen, nachdem in der Hilfsgruppe das Herunterschalten abgeschlossen ist, die nichtformschlüssige Kupplung wieder auszurücken, die Powersynchronisiereinrichtung, falls erforderlich, zu betätigen, um zu veranlassen, daß die Teile mit der Zieldrehzahl rotieren, zu veranlassen, daß die Hauptgruppe in den gewünschten Gang geschaltet wird, die nichtformschlüssige Kupplung einzurücken und zu veranlassen, daß der Motor entsprechend der Einstellung der Pedalsteuereinrichtung mit Kraftstoff versorgt wird.

10. System nach Anspruch 8 oder 9, wobei zu den reagierenden Mitteln zusätzlich Mittel gehören, die messen, ob die Differenz zwischen der gemessenen Motordrehzahl abzüglich der gemessenen Eingangswellendrehzahl einen zweiten Bezugswert übersteigt.

11. System nach den Ansprüchen 8, 9 oder 10, bei dem das Getriebe ein Verbundgetriebe mit Rangegruppe ist.

12. System nach einem der Ansprüche 8 - 11, bei dem die Hilfsgruppe (96) mit synchronisierten Klauenkupplungen (144) ausgerüstet ist.

13. System nach einem der Ansprüche 8 - 12, bei dem die Kupplung einen Drehmomentwandler (20) sowie eine reibschlüssig wirkende Drehmomentwandlertrennkupplung (24) enthält.

14. System nach Anspruch 13, bei dem den Messmitteln zusätzlich Mittel gehören, die erfassen, ob der Schlupf des Drehmomentwandlers einen zweiten Referenzwert übersteigt.

## Revendications

1. Méthode pour effectuer une rétrogradation dans un système de transmission mécanique automatisé ( 12) dit type comprenant une transmission mécanique combinée (14) comprenant une section principale (94) à plusieurs rapports de vitesse montée en série avec une section auxiliaire (96) à plusieurs rapports de vitesse, un moteur (16) commandé par l'alimentation en combustible, un accouplement glissant (10) interposé d'une manière assurant la transmission de l'entraînement entre le moteur et un arbre d'entrée (72) de ladite transmission, un dispositif (32) de commande de l'alimentation en combustible réglé par le conducteur, un dispositif (34) de commande de l'alimentation en combustible prioritaire servant au moins à diminuer la quantité de combustible fournie au moteur quel que soit le réglage du dispositif de commande de l'alimentation en combustible, un ensemble synchroniseur assisté (30) susceptible d'être actionné pour synchroniser les organes de la section principale associés en rotation audit arbre d'entrée lorsque la section principale est désaccouplée et la section auxiliaire est en prise, ledit synchroniseur assisté étant entraîné par l'arbre de sortie (22), et une unité de traitement centrale (50) conçue pour recevoir des signaux d'entrée indicatifs de l'état du système de transmission et de traiter ces signaux conformément à des règles logiques pour transmettre des signaux sortants de commande à divers actionneurs du système; ladite méthode étant caractérisée en ce qu'elle consiste:
à détecter une demande de rétrogradation assistée combinée, ce qui comporte la détection du fait que le réglage du dispositif de commande de l'alimentation en combustible dépasse une première valeur de référence;
en réponse à la détection d'une demande de rétrogradation assistée combinée, à provoquer une alimentation en combustible réduite du moteur, à provoquer le débrayage de l'embrayage glissant et à provoquer le passage au point mort de la section principale;
à provoquer alors le commencement de la rétrogradation de la section auxiliaire; et
pendant que la section auxiliaire est en train d'être rétrogradée, à maintenir la section principale au point mort, à ré-embrayer l'embrayage glissant et à ré-alimenter le moteur en combustible pour provoquer l'accélération en rotation desdits organes de la section principale vers une vitesse de rotation recherchée.

2. Méthode de la revendication 1 qui comporte, en outre:
après que la section auxiliaire a achevé la rétrogradation, à débrayer à nouveau ledit embrayage glissant, à actionner, si nécessaire, ledit synchroniseur assisté pour provoquer la rotation desdits organes a ladite vitesse recherchée, à provoquer le changement de ladite section principale dans le rapport choisi de celle-ci, à embrayer ledit embrayage glissant et à provoquer l'alimentation du moteur en combustible conformément au réglage dudit dispositif de réglage de l'alimentation en combustible.

3. Méthode selon la revendication 1 ou 2 dans laquelle ladite étape de détection comporte, en outre, I'étape qui consiste à détecter que la différence entre la vitesse détectée du moteur moins la vitesse détectée de l'arbre d'entrée dépassent une seconde valeur de référence.

4. Méthode des revendications 1, 2 et 3 dans laquelle ladite transmission est une transmission combinée du type à gammes.

5. Méthode de l'une quelconque des revendications 1 à 4 dans laquelle ladite section auxiliaire (96) est munie d'embrayages à mâchoires synchronisés.

6. Méthode de l'une quelconque des revendications 1 à 5 dans laquelle ledit accouplement comporte un convertisseur de couple (20) et un embrayage de coupure du convertisseur de couple à friction (24).

7. Méthode de la revendication 6 dans laquelle ladite étape de détection comporte en outre l'étape qui consiste à détecter que le glissement du convertisseur de couple dépasse une seconde valeur de référence.

8. Système de commande pour effectuer une rétrogradation dans un système de transmission mécanique automatisé (12) du type comprenant une transmission mécanique combinée ( 14) comprenant une section principale (94) à plusieurs rapports de vitesse montée en série avec une section auxiliaire (96) à plusieurs rapports de vitesse, un moteur (16) commandé par l'alimentation en combustible, un accouplement glissant (10) interposé d'une manière assurant la transmission de l'entraînement entre le moteur et un arbre d'entrée (72) de ladite transmission, un dispositif (32) de commande de l'alimentation en combustible réglé par le conducteur, un dispositif (34) de commande de l'alimentation en combustible prioritaire servant au moins à diminuer la quantité de combustible fournie au moteur quel que soit le réglage du dispositif de commande de l'alimentation en combustible, un ensemble synchroniseur assisté (30) susceptible d'être actionné pour synchroniser les organes de la section principale associés en rotation audit arbre d'entrée lorsque la section principale est désaccouplée et la section auxiliaire est en prise, ledit synchroniseur assisté étant entraîné par l'arbre de sortie (22), et une unité de traitement centrale (50) conçue pour recevoir des signaux d'entrée indicatifs de l'état du système de transmission et de traiter ces signaux conformément à des règles logiques pour transmettre des signaux sortants de commande à divers actionneurs du système; caractérisé en ce que:
lesdites règles comportent la détection d'une demande de rétrogradation assistée combinée, ce qui comporte la détection du fait que le réglage du dispositif de commande de l'alimentation en combustible dépasse une première valeur de référence;
des moyens fonctionnant en réponse à la détection d'une demande de rétrogradation assistée combinée, pour provoquer une alimentation en combustible réduite du moteur, pour provoquer le débrayage de l'embrayage glissant puis pour provoquer le passage au point mort de la section principale;
des moyens pour provoquer ensuite le commencement rétrogradation de la section auxiliaire; et le système étant agencé de telle sorte que:
pendant que la section auxiliaire est en train d'être rétrogradée la section principale est maintenue au point mort, I'embrayage glissant est ré-embrayé et le moteur est ré-alimenté en combustible pour provoquer l'accélération en rotation desdits organes de la section principale vers une vitesse de rotation recherchée.

9. Système de la revendication 8 comprenant en outre:
des moyens servant, après que la section auxiliaire a achevé la rétrogradation, à débrayer à nouveau ledit embrayage glissant, à actionner, si nécessaire, ledit ensemble synchroniseur assisté (30) pour provoquer la rotation desdits organes à ladite vitesse recherchée, à provoquer le changement de ladite section principale (94) dans le rapport choisi de celle-ci, à embrayer ledit embrayage glissant (10) et à provoquer l'alimentation du moteur ( 16) en combustible conformément au réglage dudit dispositif (32) de réglage de l'alimentation en combustible.

10. Système selon la revendication 8 ou 9 dans lequel lesdits moyens fonctionnant en réponse d'une demande comportent, en outre, des moyens détectant que la différence entre la vitesse détectée du moteur moins la vitesse détectée de l'arbre d'entrée dépasse une seconde valeur de référence.

11. Système de la revendications 8, 9 ou 10 dans lequel ladite transmission est une transmission combinée du type à gammes.

12. Système de l'une quelconque des revendications 8 à 1 1 dans lequel ladite section auxiliaire (96) est munie d'embrayages à mâchoires synchronisés (144).

13. Système de l'une quelconque des revendications 8 à 12 dans lequel ledit accouplement comporte un convertisseur de couple (20) et un embrayage de coupure du convertisseur de couple à friction (24).

14. Système de la revendication 13 dans laquelle lesdits moyens de détection comportent en outre des moyens qui détectent que le glissement du convertisseur de couple dépasse une seconde valeur de référence.
